# FASCICULE DE BREVET EUROPEEN

(11) **EP 2 387 090 B1**
(45) Date de publication et mention de la délivrance du brevet: **24.04.2019**
(21) Numéro de dépôt: 11177387.5
(22) Date de dépôt: 30.10.2007
(51) Int. Cl.: H01M 4/58

(54) **Oxydes complexes carbones, procédé pour leur préparation**
Komplexe Kohlenstoffoxide, Verfahren zu ihrer Herstellung
Complex carbon oxides, method for preparing same

(30) Priorité: 30.10.2006 CA 2566906
(43) Date de publication de la demande: 16.11.2011
(62) Demande divisionnaire de: 07870235.4
(73) Titulaire: Johnson Matthey Public Limited Company, London EC4A 4AB (GB); Université de Montréal, Montreal QC H3C 3J7 (CA)
(72) Inventeur: Ravet, Nathalie, MONTREAL, H2L 4A5 (CA); Gauthier, Michel, LA PRAIRIE, J5R 1E6 (CA); Lahrs, Thorsten, SAINT BRUNO DE MONTARVILLE, J3V 6B7 (CA); Liang, Guoxian, ST-HYACINTHE, J2R 2C4 (CA); Michot, Christophe, MONTREAL, H2T 2Z9 (CA)
(74) Mandataire: Lavoix

(56) Documents cités:
- EP-A- 1 049 182
- WO-A-02/27824
- JP-A- 2003 292 309

## Description

La présente invention concerne un procédé pour la préparation d'oxydes complexes carbones ayant une très faible teneur en eau, ainsi que leur utilisation comme matériau de cathode.

Durant les 20 dernières années, les batteries lithium-ion sont devenues la source d'énergie principale pour les dispositifs électroniques mobiles, grâce à leur densité d'énergie élevée et à leur grande durée de vie en cyclage. Cependant, les problèmes de sécurité liés à l'utilisation de LiCoO₂ pour la cathode limitent la possibilité de développer à grande échelle des batteries lithium-ions fiables. Le remplacement de LiCoO₂ par un phosphate de lithium et de fer comme matériau de cathode a été proposé (Cf. US-5,910,382, US-6,391,493 et US-6,514,640). Les problèmes de sécurité sont ainsi résolus, grâce à la liaison covalente P-O qui stabilise la cathode totalement chargée par rapport à la libération d'oxygène. Le phosphate LiFePO₄, qui a une structure olivine, présente une cinétique non optimale induite par la conductivité électronique intrinsèque faible qui résulte du fait que les polyanions PO₄ sont lies de manière covalente. Cependant, l'utilisation de particules sub-nanométriques (proposée dans US-5,910,382), de préférence sous forme de particules portant une fine couche de carbone à leur surface (comme décrit dans US-6,855,273, US-6,962,666, WO02/27823 A1 & WO02/27824 A1) a permis de développer et de commercialiser un phosphate LiFePO₄ portant un dépôt de carbone de grade batterie qui a une capacité élevée et qui peut fournir une puissance élevée. Le phosphate de lithium et de fer peut en outre être modifié par remplacement partiel des cations Fe par des cations métalliques isovalents ou aliovalents tels que par exemple Mn, Ni, Co, Mg, Mo, Nb, Ti, Al, Ta, Ge, La, Y, Yb, Sm, Ce, Hf, Cr, Zr, Bi, Zn, Ca et W, ou par remplacement partiel de l'oxyanion PO₄ par SiO₄, SO₄ ou MoO₄ (comme décrit dans US-6,514,640).

JP2003 292309 décrit un procédé de préparation de particules C-LiFePO₄ qui comprend une étape de pyrolyse. Le matériau obtenu après pyrolyse dans les exemples 1-3 contient un taux en eau qui excède 2000 ppm tel que décrit dans les Tableaux 4 et 6. Ce n'est que par la suite d'une étape de séchage que le taux en eau est réduit aux valeurs indiquées dans le tableau 6.

Les matériaux de cathode lithiés préparés à l'état déchargé sont réputés être stables à l'égard de l'oxygène. On peut citer notamment les oxydes lithiés de l'un au moins des éléments suivants: cobalt, nickel, manganèse. Cependant, les inventeurs ont remarqué que, de façon surprenante, la qualité de LiFePO₄ portant un dépôt de carbone, en particulier sous forme de poudre à grande surface spécifique ou sous forme de revêtement d'un collecteur pour former une cathode, pouvait se dégrader lors d'une exposition a l'air ou pendant une manipulation ou un stockage. Il en résulte une altération du produit ou une formation d'impuretés, qui peuvent ensuite exercer un effet néfaste sur la cyclabilité ou la rétention de charge de la batterie qui contient le phosphate.

La séquence de réactions qui provoque la dégradation du produit ou la formation des impuretés peut être complexe et variable, en fonction de la voie de synthèse, des modalités du dépôt de la couche de carbone par pyrolyse, de la constitution et du mode de fonctionnement de la batterie. La synthèse peut être effectuée par exemple par voie hydrothermale, à l'état solide ou à l'état fondu, chaque voie générant des impuretés spécifiques. Une dégradation fréquente est la transformation de Fe⁺² en Fe⁺³ avec formation de produit connexes.

Le but de la présente invention était d'identifier certaines des impuretés spécifiques formées lors de la dégradation du matériau et de fournir un procédé permettant d'éviter la formation des impuretés et la dégradation de l'oxyde complexe.

Les résultats des recherches effectuées par les inventeurs ont montré d'une part que la dégradation d'un oxyde complexe (notamment LiFePO₄) portant un dépôt de carbone était, de manière surprenante, plus importante que celle d'un oxyde complexe sans dépôt de carbone, et qu'elle était due essentiellement à la combinaison de la présence d'espèces oxydantes (en particulier l'oxygène de l'air) et d'un taux d'humidité relativement élevé dans le milieu ambiant ou dans le milieu réactionnel. Il a été constaté en outre que l'exposition des mêmes matériaux à l'air sec provoquait une dégradation nulle ou une dégradation qui reste à un niveau suffisamment faible pour ne pas être dommageable.

Les inventeurs ont alors mis au point un procédé dans lequel l'atmosphère autour de l'oxyde complexe est contrôlée pendant toute la durée du processus de préparation, incluant même l'étape de pyrolyse et de formation de carbone conducteur, mais aussi pendant le stockage et l'utilisation, de manière à maintenir le taux d'humidité de l'oxyde complexe carbone a une valeur inferieure à 1000 ppm pendant toutes les étapes de sa préparation, de son stockage et son utilisation.

C'est pourquoi la présente invention décrit un matériau C-AMXO₄, dans lequel le taux d'humidité est inférieur à 1000 ppm, c'est-à-dire un matériau stable dans le temps vis-à-vis de l'oxydation, un procédé pour son élaboration, ainsi qu'une électrode qui le contient et l'utilisation de cette électrode dans une batterie au lithium.

Le matériau préparé par le procédé de la présente invention, désigné ci-après par "matériau C-AMXO₄", est constitué par des particules d'un composé répondant à la formule AMXO₄ qui ont une structure olivine et qui portent sur au moins une partie de leur surface un film de carbone déposé par pyrolyse, la formule AMXO₄ étant telle que :
- A représente Li, seul ou partiellement remplacé par au plus 10% atomique de Na ou K;
- M représente Fe^{II}, seul ou partiellement remplacé par au plus 50% atomique d'un ou plusieurs autres métaux choisis parmi Mn, Ni et Co, et/ou par au plus 10% atomique d'un ou plusieurs métaux aliovalents ou isovalents autres que Mn, Ni ou Co, et/ou par au plus 5% atomique de Fe^{III};
- XO₄ représente PO₄ seul ou partiellement remplacé par au plus 10% molaire d'au moins un groupe choisi parmi SO₄ et SiO₄;
ledit matériau ayant une teneur en eau inférieure à 1000 ppm.

Dans le matériau, le dépôt de carbone est un dépôt uniforme, adhérent et non poudreux. Il représente de 0,03 A 15% en poids, de préférence de 0,5 à 5% en poids par rapport au poids total du matériau.

Le matériau, lorsqu'utilisé comme matériau de cathode, présente au moins un plateau de décharge / charge a environ 3,4-3,5 V vs Li, caractéristique du couple Fe⁺²/Fe⁺³.

Le procédé selon la présente invention consiste à préparer le matériau C-AMXO₄ par un procédé comprenant une étape de pyrolyse d'un compose source de carbone conducteur, et il est caractérisé en ce que ledit matériau C-AMXO₄ est placé immédiatement après son obtention dans une atmosphère contrôlée, puis maintenu dans ladite atmosphère contrôlée, pendant son stockage et utilisation, ladite atmosphère contrôlée étant soit une atmosphère oxydante avec un point de rosée inférieur à -30°C, de préférence inférieur à -50°C et et plus particulièrement inférieur à -70°C, soit une atmosphère non oxydante.

Dans la suite du texte, l'expression "atmosphère contrôlée" désignera "une atmosphère non oxydante, ou une atmosphère oxydante avec un point de rosée inférieur à -30°C.

Dans un 1^{er} mode de réalisation particulier, le matériau C-AMXO₄ est constitué par des particules d'un composé répondant à la formule AMXO₄ qui ont une structure olivine et qui portent sur au moins une partie de leur surface un film de carbone déposé par pyrolyse, la formule AMXO₄ étant telle que:
- A représente Li, seul ou partiellement remplacé par au plus 10% atomique de Na ou K ;
- M représente Fe^{II}, seul ou partiellement remplacé par au plus 50% atomique d'un ou plusieurs autres métaux choisis parmi Mn, Ni et Co, et/ou par au plus 10% atomique d'un ou plusieurs métaux aliovalents ou isovalents choisis parmi Mg, Mo, Nb, Ti, Al, Ta, Ge, La, Y, Yb, Sm, Ce, Hf, Cr, Zr, Bi, Zn, Ca et W, et/ou par au plus 5% atomique de Fe^{III} ;
- XO₄ représente PO₄ seul ou partiellement remplacé par au plus 10% molaire d'au moins un groupe choisi parmi SO₄ et SiO₄.
il est caractérisé en ce qu'il contient moins de 1000 ppm d'eau, de préférence moins de 500 ppm, plus particulièrement moins de 200 ppm.

Dans un 2^{ème} mode de réalisation, l'oxyde complexe AMXO₄ contient moins de 1 000 ppm d'eau, et moins de 1 000 ppm de LiOH, de Li₃PO₄, de Li₄P₂O₇, de polyphosphates de lithium éventuellement hydratés ou de Li₂CO₃, de préférence moins de 500 ppm, et plus particulièrement moins de 200 ppm.

Dans un 3^{ème} mode de réalisation autre mode de réalisation, l'oxyde complexe AMXO₄ contient moins de 1 000 ppm d'eau, et moins de 10 000 ppm de Fe₂O₃, Li₃Fe₂(PO₄)₃, LiFeP₂O₂, ou d'un composé de Fe⁺³ détectable par voie électrochimique, de préférence moins de 5 000 ppm, et plus particulièrement moins de 2 000 ppm.

Le taux d'humidité d'un matériau peut être mesuré à l'aide d'appareillages couramment utilisés dans l'industrie. On peut citer comme exemple le Computrac Vapor Pro L commercialisé par la société Arizona Instrument LLC (USA), ou les appareils pour la mesure d'humidité des sociétés Mettler Toledo (USA) ou Brinkmann (USA).

Les propriétés des matériaux peuvent être adaptées en choisissant de manière appropriée le ou les éléments remplaçant partiellement Fe. Par exemple, dans un matériau dans lequel l'oxyde complexe répond à la formule LiFe_{1-x-y}M'ₓM"_{y}PO₄, le choix de M' parmi Mn, Ni et Co permet d'ajuster les potentiel de décharge moyen du matériau de cathode. Le choix de M" parmi Mg, Mo, Nb, Ti, Al, Ca, et W permet d'ajuster les propriétés cinétiques du matériau de cathode.

Parmi les matériaux ci-dessus, ceux dans lesquels l'oxyde complexe AMXO₄ répond à la formule LiFe₁₋ₓMnₓPO₄, avec 0≤x≤0,5 sont particulièrement préférés.

Dans un mode de réalisation particulièrement avantageux, l'oxyde complexe AMXO₄ est LiFePO₄ et le matériau contient moins de 1 000 ppm d'eau, et moins de 1 000 ppm de LiOH, de Li₃PO₄, de Li₄P₂O₇, de polyphosphates de lithium éventuellement hydratés ou de Li₂CO₃, de préférence moins de 500 ppm, et plus particulièrement moins de 200 ppm. En outre, il est préféré que le matériau contienne moins de 10 000 ppm de Fe₂O₃, de Li₃Fe₂(PO₄)₃, de LiFeP₂O₇, ou d'un composé du Fe⁺³ détectable par voie électrochimique, de préférence moins de 5 000 ppm, et plus particulièrement moins de 2 000 ppm.

Dans le cadre de la présente invention, l'expression "particules" englobe aussi bien des particules élémentaires que des agglomérats de particules élémentaires. La dimension des particules élémentaires est de préférence comprise entre 10 nm et 3 µ. La dimension des agglomérats est de préférence comprise entre 100 nm et 30 µm. Ces dimensions de particules et la présence du dépôt de carbone confèrent au matériau une surface spécifique élevée, typiquement entre 5 et 100 m²/g.

Le matériau C-AMXO₄ peut être préparé par divers procédés, avant d'être placé dans une atmosphère contrôlée telle que définie ci-dessus. Il peut être obtenu par exemple par voie hydrothermale, par voie thermique à l'état solide, ou par voie fondue.

Dans un mode de réalisation préféré, le procédé de l'invention est mis en oeuvre en faisant réagir par mise en équilibre, thermodynamique ou cinétique, une atmosphère gazeuse avec un mélange dans les proportions requises des composés sources a), b), c) d) et e) suivants :
a) un ou plusieurs composés sources du ou des éléments formant A ;
b) une source ou plusieurs sources du ou des éléments formant M ;
c) un composé source du ou des éléments X ;
d) un composé source d'oxygène ;
e) un composé source de carbone conducteur ;
la synthèse étant effectuée en continu dans un four rotatif en contrôlant la composition de ladite atmosphère gazeuse, la température de la réaction de synthèse et le taux du composé source c) relativement aux autres composés sources a), b) d) et e), pour imposer l'état d'oxydation du métal de transition au degré de valence voulu pour la constitution du composé de type AMXO₄
le procédé comportant une étape de pyrolyse du composé e).

Dans ce mode de réalisation, le flux gazeux et le flux de produits solides circulent à contre-courant. Si l'atmosphère gazeuse contrôlée est de l'azote sec, le matériau C-AMXO₄ récupéré à la sortie du four contient moins de 200 ppm d'eau. Ce matériau C-AMXO₄ ainsi obtenu est immédiatement transféré dans une atmosphère contrôlée, telle que définie précédemment.

La teneur en eau du matériau final dépend d'une part de la teneur en eau de l'atmosphère contrôlée, et d'autre part de la durée de maintien dans ladite atmosphère. La teneur en eau du matériau augmente lorsque la durée de maintien dans l'atmosphère contrôlée augmente et lorsque la teneur en eau de l'atmosphère contrôlée augmente.

Le procédé de l'invention est particulièrement utile pour l'élaboration d'un matériau C-LiFePO₄ contenant moins de 1000 ppm d'eau. Pour l'élaboration de ce matériau, le composé source a) est un composé de lithium choisi par exemple dans le groupe constitué par l'oxyde ou l'hydroxyde de lithium, le carbonate de lithium, le phosphate neutre Li₃PO₄, le phosphate acide LiH₂PO₄, l'ortho, le méta ou les poly silicates de lithium, le sulfate de lithium, l'oxalate de lithium et l'acétate de lithium, ou un de leurs mélanges. Le composé source b) est un composé du fer, par exemple l'oxyde de fer III ou la magnétite, le phosphate de fer trivalent, l'hydroxyphosphate de fer et de lithium ou le nitrate de fer trivalent, le phosphate ferreux, la vivianite hydratée ou non Fe₃(PO₄)₂), l'acétate de fer (CH₃COO)₂Fe, le sulfate de fer (FeSO₄), l'oxalate de fer, le phosphate de fer et d'ammonium (NH₄FePO₄), ou un de leurs mélanges. Le composé source c) est un composé du phosphore, par exemple l'acide phosphorique et ses esters, le phosphate neutre Li₃PO₄, le phosphate acide LiH₂PO₄, les phosphates mono- ou di-ammonique, le phosphate de fer trivalent, le phosphate de manganèse et d'ammonium (NH₄MnPO₄). Tous ces composés sont en outre source d'oxygène et certains d'entre eux sont sources d'au moins deux éléments parmi Li, Fe et P.Le dépôt de carbone sur la surface des particules d'oxyde complexe AMXO₄ est obtenu par pyrolyse d'un composé source e).

La pyrolyse du composé e) peut être effectuée en même temps que la réaction de synthèse entre les composés a) à d) pour former le composé AMXO₄. Elle peut aussi être effectuée dans une étape consécutive à la réaction de synthèse.

Le dépôt de la couche de carbone conducteur à la surface des particules d'oxyde complexe AMXO₄ peut être obtenue par décomposition thermique de composés sources e) très variés. Un composé source approprié est un composé qui est à l'état liquide ou à l'état gazeux, un composé qui peut être utilisé sous forme d'une solution dans un solvant liquide, ou un composé qui passe à l'état liquide ou gazeux au cours de sa décomposition thermique, de manière à enrober plus ou moins parfaitement les particules d'oxyde complexe.

Le composé source e) peut par exemple être choisi parmi les hydrocarbures liquides, solides ou gazeux, et leurs dérivés (en particulier les espèces polycycliques aromatiques telles que le goudron ou le brai), le pérylène et ses dérivés, les composés polyhydriques (par exemple les sucres et les hydrates de carbone, et leurs dérivés), les polymères, la cellulose, l'amidon et leurs esters et éthers, et leurs mélanges. Comme exemple de polymères, on peut citer les polyoléfines, les polybutadiènes, l'alcool polyvinylique, les produits de condensation des phénols (y compris ceux obtenus à partir de réaction avec des aldéhydes), les polymères dérivés de l'alcool furfurylique, du styrène, du divinyl-benzène, du naphtalène, du pérylène, de l'acrylonitrile, et de l'acétate de vinyle.

Lorsque le composé e) est CO ou un hydrocarbure gazeux, il est soumis à une dismutation, avantageusement catalysée par un élément métal de transition présent dans au moins un des précurseurs a) à c), ou par un composé d'un métal de transition ajouté au mélange de précurseurs.

Lorsque le composé source e) est un gaz ou un mélange de gaz tels que l'éthylène, le propylène, l'acétylène, le butane, le 1,3 butadiène, ou le 1-butène, la décomposition thermique est effectuée par craquage dans un four à une température entre 100 et 1300°C et plus particulièrement entre 400 et 1200°C, de préférence en présence d'un gaz porteur inerte. (Cf. par exemple US 2002/195591 A1 et US 2004/157126 A1).

Le dépôt de carbone peut en outre être effectué par CVD à partir d'hydrocarbures, comme décrit dans JP 2006-302671.

Dans les divers procédés de préparation des oxydes complexes carbonés C-AMXO₄, certaines étapes peuvent provoquer un frittage ou une agglomération des particules. Il est donc fortement recommandé de soumettre l'oxyde complexe obtenu par la synthèse à un broyage pour assurer l'homogénéité du produit final et en contrôler la taille et éventuellement le degré de désagglomeration. Le broyage à jet, classiquement désigné par "jet milling", est un moyen commode pour contrôler les dimensions des particules et des agglomérats. Mais on a constaté qu'il générait dans certains cas une dégradation irréversible du produit. Le procédé de la présente invention est donc particulièrement utile lorsque la préparation de l'oxyde complexe destiné à former la matière active d'une cathode doit subir un broyage pour avoir la granulométrie optimale. Le broyage est effectué dans une atmosphère contrôlée telle que définie précédemment, et sur un matériau contenant moins de 1000 ppm d'eau, tel qu'obtenu à la fin de l'étape de pyrolyse.

La dégradation irréversible de C-LiFePO₄ lorsqu'il est exposé à l'air humide, c'est-à-dire à la fois à l'oxygène et à l'eau., peut être le résultat de divers processus chimiques. Les mécanismes suivants sont donnés ci-après, mais de manière non limitative.

LiFePO₄ + ¼ O₂ + ½ H₂O → FePO₄ + LiOH (LiOH évoluant vers LiCO₃)

3 LiFePO₄ + ¾ O₂ + ½ H₂O → LiFeP₂O₇ + Fe₂O₃ + LiH₂PO₄

3 LiFePO₄ + ¾ O₂ → Li₃Fe₂(PO₄)₃ + ½ Fe₂O₃

Les mécanismes de dégradation pourraient aussi impliquer des impuretés provenant de la synthèse de LiFePO₄, ou des impuretés produites ou modifiées pendant l'étape de pyrolyse effectuée pour déposer le carbone conducteur dans le coeur des particules ou à leur surface.

Les inventeurs ont découvert que les matériaux C-LiFePO₄ portant un revêtement de carbone sont plus sensibles à la dégradation par l'air humide que les matériaux LiFePO₄ sans carbone, en particulier lorsqu'ils ont une grande surface spécifique. Pour un matériau C-LiFePO₄, plusieurs mécanismes électrochimiques de dégradation peuvent être envisagés, à cause du triple contact entre la phase gazeuse, le carbone conducteur et les composés qui contiennent l'espèce Fe⁺² (l'oxyde complexe LiFePO₄ et/ou différentes impuretés qui dépendent de la voie de synthèse de LiFePO₄, par exemple Fe₂P ou Fe₂P₂O₇). Ces mécanismes peuvent être représentés par

2 Fe⁺² → 2 Fe⁺³ + 2 e⁻ + 2 Li⁺

1/2 O₂ +H₂O + 2 e⁻ + 2 Li⁺ → 2 LiOH

La formation de Fe⁺³ et la formation de LiOH sont concomitantes. La nature exacte des produits de dégradation est incertaine, du fait que ces produits peuvent réagir entre eux ou avec d'autres éléments d'une cellule électrochimique qui contient le matériau C-LiFePO₄. Cependant, leur présence et leur activité électrochimique est illustrée dans les exemples décrits ultérieurement dans le présent texte.

En d'autres termes, lorsque le matériau C-LiFePO₄ est mis en présence d'oxygène et d'eau, il peut être considéré comme une batterie carbone-LiFePO₄ en court-circuit, l'eau jouant le rôle de l'électrolyte, du fait que la surface des particules de LiFePO₄ n'est pas totalement couverte par le carbone, et O₂ joue le rôle d'oxydant. La combinaison de plusieurs couples électrochimiques, d'une surface spécifique élevée, de l'activation de la surface par le carbone pourrait expliquer les difficultés spécifiques rencontrées lors du stockage et de l'utilisation de C-LiFePO₄ en présence d'air humide.

La libération possible de LiOH/Li₂CO₃ peut provoquer non seulement une perte irréversible de capacité, mais aussi la dégradation d'un électrolyte contenant LiPF₆ ou d'autres éléments d'une batterie.

Même si ces difficultés spécifiques présentent des inconvénients, en particulier pour des expériences en laboratoire, elles peuvent être résolues à l'échelle industrielle par des solutions technologiques appropriées, en particulier en contrôlant les conditions d'exposition du matériau à O₂ et à l'humidité.

Un matériau C-AMXO₄ préparé est particulièrement utile comme cathode dans une batterie au lithium. La batterie au lithium peut être un batterie à électrolyte solide dans laquelle l'électrolyte peut être un électrolyte polymère plastifié ou non, une batterie dans laquelle un électrolyte liquide est supporté par un séparateur poreux, ou une batterie dans laquelle l'électrolyte est un gel.

La cathode est constituée de préférence par un matériau composite appliqué sur un collecteur, ledit matériau composite comprenant C-AMXO₄, un liant et un matériau favorisant la conduction électronique. Le matériau favorisant la conduction électronique est choisi avantageusement parmi le noir de carbone, le graphite, les fibres de carbone (par exemple sous forme de nanotubes de carbones ou de fibres VGCF (Vapor Grown Carbon Fiber) dont la croissance est effectuée en phase gazeuse).

La capacité de la cathode est couramment exprimée en mg de matière électroactive par cm² de la surface de la cathode.

Lorsque la cathode est destinée à une batterie à électrolyte polymère, le liant est de préférence un polymère solvatant, de préférence le polymère qui forme le solvant de l'électrolyte.

Lorsque la cathode est destinée à une batterie à électrolyte liquide, le liant peut être un polymère non solvatant, par exemple un copolymère PVdF-HFP ou un copolymère styrène-butadiène-styrène.

La cathode est élaboré à partir d'un matériau C-AMXO₄ ayant une teneur en eau inférieure à 1000 ppm, utilisé directement après sa synthèse, ou conservé dans une atmosphère contrôlée et/ou traité dans une atmosphère contrôlée. S'il est nécessaire de broyer les particules de C-AMXO₄ avant de les incorporer dans le matériau composite de cathode, il convient d'effectuer le broyage sous une atmosphère contrôlée. Une technique de broyage particulièrement utile est le jet milling.

Un matériau C-LiFePO₄ et un matériau C-LiMPO₄ dans lequel M représente Fe partiellement remplacé par Mn ou Mg sont particulièrement préférés comme matière active de cathode.

Le procédé selon l'invention a été mis en oeuvre de manière comparative avec les techniques de l'art antérieur, afin de démontrer que la limitation du taux d'humidité à des valeurs très faibles avait un effet favorable sur les performances du matériau C-AMXO₄ utilisé comme matériau de cathode dans une batterie au lithium.

Dans tous les essais, les teneurs en eau des matériaux ont été déterminées à l'aide d'un Computrac Vapor Pro L commercialisé par la société ARIZONA Instruments LLC .

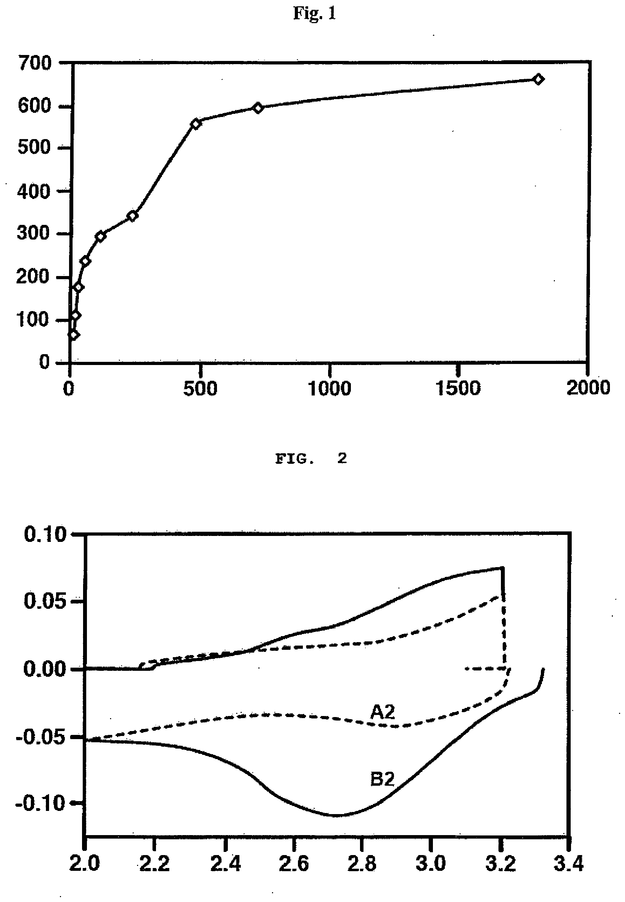

Les résultats sont reproduits sur les figures 1 à 8.
La figure 1 représente la teneur en eau d'un matériau C-LiFePO₄ ayant une teneur en carbone d'environ 1,8% et une surface spécifique de 13 m²/g, pour différentes durées d'exposition à une atmosphère d'air à 20% d'humidité relative. La teneur en eau, exprimée en ppm, est donnée en ordonnée, et la durée d'exposition, exprimée en secondes, en donnée en abscisse.
La figure 2 représente un diagramme de voltampérométrie lente à température ambiante pour deux batteries A2 et B2 du type Li / 1M LiPF₆ EC:DEC 3:7 / C-LiFePO₄. L'intensité normalisée (en mAh/g) est indiquée en ordonnée, et le potentiel vs Li⁺/Li (en volts) est indiqué en abscisse. Le 1^{er} balayage est effectué en réduction (courbes A2 et B2 supérieures) et le 2^{ème} balayage est effectué en oxydation (courbes A2 et B2 inférieures). L'électrode positive de la batterie B2 a été élaborée à partir d'un matériau C-LeFiPO₄ resté pendant 8 jours à l'air après son obtention. L'électrode positive de la batterie A2 a été préparée à partir d'un matériau C-LiFePO₄ directement après son obtention.

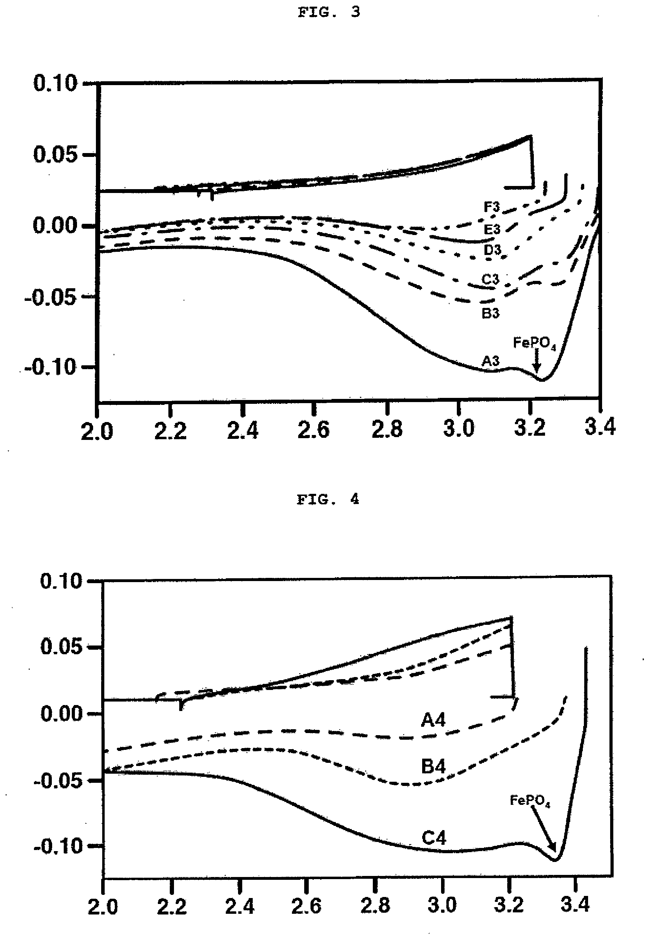

La figure 3 représente un diagramme de voltampérométrie lente à température ambiante pour des batteries A3, B3, C3, D3, E3 et F3 du type Li/ 1M LiPF₆ EC:DEC 3:7 /C-Li₁-ₓFePO₄. L'intensité normalisée (en mAh/g) est indiquée en ordonnée, et le potentiel vs Li⁺/Li (en volts) est indiqué en abscisse. Le 1^{er} balayage est effectué en réduction (courbes A3 à F3 supérieures) et le 2^{ème} balayage est effectué en oxydation (courbes A3 à F3 inférieures). Les matériaux C-Li₁₋ₓFePO₄ de l'électrode positive des batteries A3 à E3 ont été préparés par oxydation chimique de C-LiFePO₄ par le phényl iodoso diacétate dans l'acétonitrile. La correspondance entre les batteries et les différentes valeurs du taux x est comme suit :

| | A3 | B3 | C3 | D3 | E3 | F3 |
|---|---|---|---|---|---|---|
| x | 0,1 | 0,08 | 0,06 | 0,04 | 0,02 | 0 |

Le matériau C-Li₁₋ₓFePO₄ de l'électrode positive de la batterie F3 utilisé comme témoin (x=O) a été traité de la même façon que les autres dans de l'acétonitrile pur avant d'être déposé sur le collecteur.
La figure 4 représente un diagramme de voltampérométrie lente à température ambiante 60°Cpour trois batteries A4, B4 et C4 du type Li / 1M LiPF₆ EC:DEC 3:7 / C-LiFePO₄. L'intensité normalisée (en mAh/g) est indiquée en ordonnée, et le potentiel vs Li⁺/Li (en volts) est indiqué en abscisse. Le 1^{er} balayage est effectué en réduction (courbes A4, B4 et C4 supérieures) et le 2^{ème} balayage est effectué en oxydation (courbes A4, B4 et C4 inférieures). Pour chaque batterie, l'électrode positive a été préparée à partir d'une poudre de matériau C-LiFePO₄ directement après son obtention. Une électrode fraîchement préparée a été montée dans la batterie A4. Pour les batteries B4 et C4, l'électrode a été montée respectivement après un stockage de 8 jours et de 31 jours sous air ambiant.

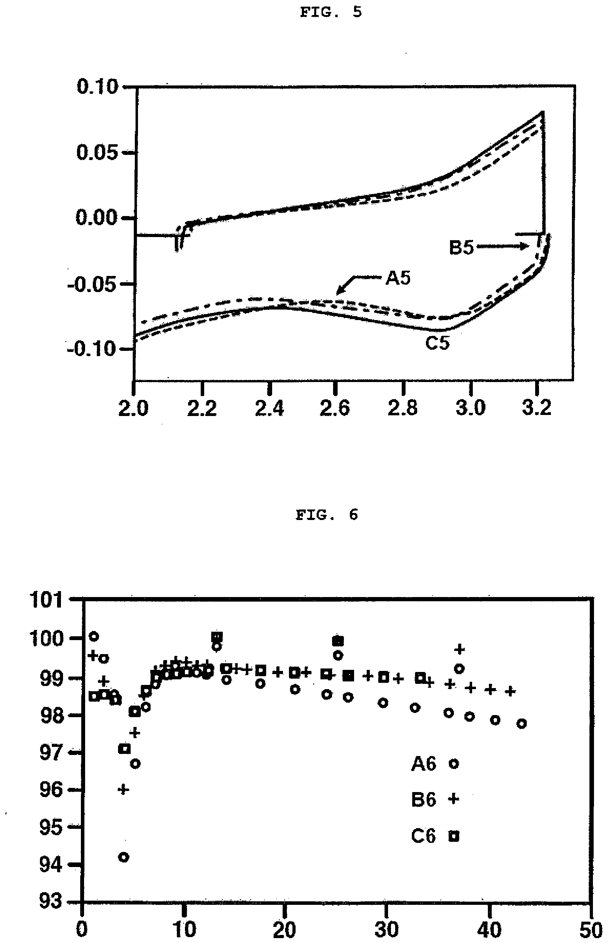

La figure 5 représente un diagramme de voltampérométrie lente à température ambiante pour trois batteries A5, B5 et C5 du type Li/ 1M LiPF₆ EC:DEC 3:7 / C-LiFePO₄. L'intensité normalisée (en mAh/g) est indiquée en ordonnée, et le potentiel vs Li⁺/Li (en volts) est indiqué en abscisse. Le 1^{er} balayage est effectué en réduction (courbes A5, B5 et C5 supérieures) et le 2^{ème} balayage est effectué en oxydation (courbes A5, B5 et C5 inférieures). Pour chaque batterie, l'électrode positive a été préparée à partir d'une poudre de matériau C-LiFePO₄ directement après son obtention. Une électrode fraîchement préparée a été montée dans la batterie A5. Pour les batteries B5 et C5, l'électrode a été montée après un stockage de 31 jours respectivement sous argon sec (batterie B5) et sous air sec (batterie C5).
La figure 6 représente la courbe de cyclage intentiostatique C/4 à 60°C pour trois batteries A6, B6 et C6 du type Li / 1M LiPF₆ EC:DEC 3:7/ C-LiFePO₄. La capacité est normalisée en % relativement à celle obtenue pendant le 1^{er} cycle en décharge en voltampérométrie lente est indiquée en ordonnée, et le nombre de cycles est indiqué en abscisse. Pour chaque batterie, l'électrode positive a été préparée à partir d'une poudre de matériau C-LiFePO₄ directement après son obtention. L'électrode ainsi préparée a été utilisée après 31 jours de stockage sous air ambiant pour la batterie A6, sous argon sec pour la batterie B6 et sous air sec pour la batterie C6.

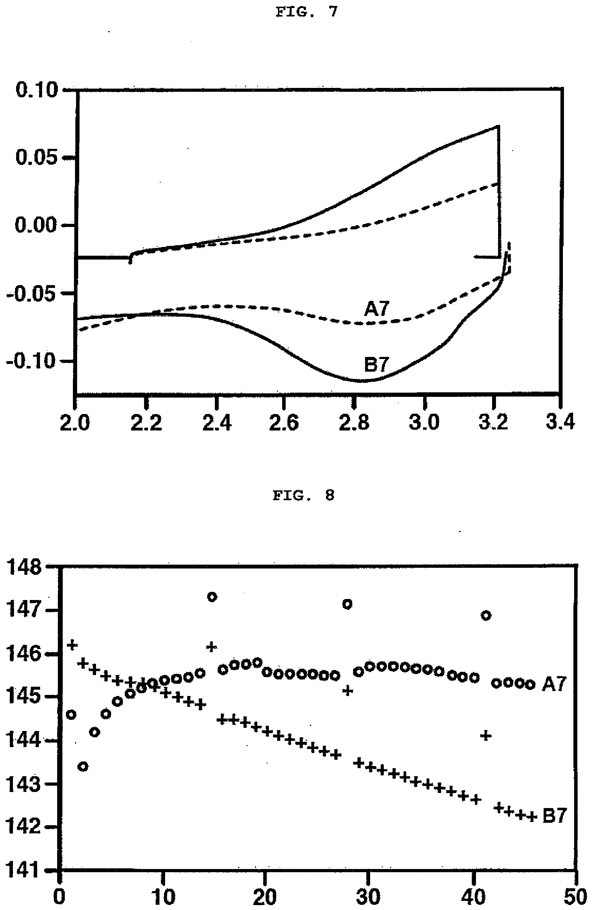

La figure 7 représente un diagramme de voltampérométrie lente à température ambiante pour des batteries A7 et B7 du type Li / 1M LiPF₆ EC:DEC 3 :7 / C-LiFePO₄. L'intensité normalisée (en mAh/g) est indiquée en ordonnée, et le potentiel vs Li⁺/Li (en volts) est indiqué en abscisse. Le 1^{er} balayage est effectué en réduction (courbes A7, B7 supérieures) et le 2^{ème} balayage est effectué en oxydation (courbes A7, B7 inférieures). Les électrodes positives ont été élaborées en déposant sur un collecteur, le matériau C-LeFiPO₄ immédiatement après son obtention, sans broyage pour l'électrode de la batterie A7, avec un broyage à jet sous air comprimé pendant 3 min avec un point de rosée de -6°C, pour l'électrode de la batterie B7.
La figure 8 représente la courbe de cyclage intentiostatique C/4 à 60°C pour les batteries A7 et B7 effectué après la voltampérométrie cyclique. La capacité de la batterie, (en mAh par g de C-LiFePO₄) est indiquée en ordonnée, et le nombre de cycles est indiqué en abscisse.

### Exemple la

### Synthèse de C-LiFePO₄

On a préparé un mélange contenant FePO₄•(H₂O)₂ (1 mole, commercialisé par Budenheim, grade E53-81) et Li₂CO₃ (1 mole, commercialisé par Limtech, taux de pureté : 99,9% en quantités stoechiométriques, et 5% de polyéthylène-block-poly(éthylène glycol) contenant 50% d'oxyde d'éthylène (commercialisé par Aldrich), on l'a introduit dans de l'alcool isopropylique et on a mélangé pendant environ 10 h, puis on a éliminé le solvant. Dans le matériau ainsi obtenu, le polymère maintient ensemble les particules de phosphate et de carbonate.

On a traité le mélange sous un courant d'azote à 700°C pendant 2 heures, pour obtenir un matériau C-LiFePO₄ de grade batterie, puis on a séché sous vide à 100°C et on a stocké le matériau final en boîte à gant sous atmosphère d'argon à un point de rosée de -90°C.

Le matériau a une surface spécifique de 13,6 m²/g et une teneur en carbone de 1,8% en poids.

### Sensibilité à l'eau du matériau C-LiFePO₄ broyé

On a soumis le matériau obtenu à un broyage à jet sous air comprimé pendant 3 min à un point de rosée de -70°C, puis on a divisé le matériau ainsi obtenu en plusieurs fractions.

Chaque fraction a été séchée sous vide à 120°C pendant 1 heure (pour obtenir un échantillon parfaitement sec), puis exposée à une atmosphère ayant une teneur en eau relative de 20%. La durée d'exposition est différente pour chaque fraction, ce qui a permis de vérifier l'évolution de la teneur en eau en fonction de la durée d'exposition. Pour la mesure, chaque échantillon est placé dans un flacon septum hermétique. La figure 1 représente l'évolution de la teneur en eau du matériau, en fonction de la durée du contact avec l'atmosphère humide.

Il apparaît que, de manière surprenante, le matériau C-LiFePO₄ adsorbe des quantités non négligeables d'eau, malgré le dépôt d'une couche superficielle de carbone qui est hydrophobe. La teneur en eau est ainsi d'environ 200 ppm après 30 sec, d'environ 500 ppm après environ 10 min, et supérieure à 2 000 ppm après 3 heures.

Ces résultats montrent que le C-LiFePO₄ présente un problème spécifique et surprenant de reprise d'eau et que les conditions de séchage et de manipulations doivent être parfaitement contrôlées pour produire un produit de qualité batterie.

### Exemple 1b

### Synthèse de C-LiFe_{0,5}Mn_{0,5}PO₄

On a préparé un composé LiFe_{0,5}Mn_{0,5}PO₄ en mélangeant les précurseurs LiH₂PO₄, FeC₂O₄.2H₂O et (CH₃COO)₂Mn.4H₂O en quantités stoechiométriques. Le mélange a ensuite été broyé dans l'heptane, puis séché et chauffé progressivement jusqu'à 400°C sous air pour décomposer les groupements acétates et oxalates. Cette température a été maintenue pendant 8 heures. Au cours de ce traitement, le fer II s'oxyde en fer III.

Le mélange a ensuite été rebroyé dans une solution d'acétone contenant une quantité d'acétate de cellulose (précurseur de carbone) représentant 39,7% en poids de groupements acétyle et 5 % en poids par rapport au mélange.

Après séchage, le mélange a été chauffé à raison de 6°C par minute jusqu'à 700°C dans un four tubulaire. Cette température a été maintenue pendant une heure, puis l'échantillon a été refroidi en 40 minutes soit avec une vitesse de refroidissement d'environ 15°C par minute. Le four tubulaire a été maintenu sous balayage du gaz réducteur (CO/CO₂ : 1/1) pendant toute la durée du traitement thermique (environ 3 heures et demi).

On a ainsi obtenu un matériau C-LiFe_{0.5}Mn_{0.5}PO₄ de grade batterie, que l'on a séché sous vide à 100°C, puis stocké en boîte à gant sous atmosphère d'argon à un point de rosée de -90°C.

Ce matériau a une surface spécifique de 16,2 m²/g et une teneur en carbone de 1,2% en poids.

Dans les mêmes conditions que dans l'exemple la, le matériau broyé présente un taux d'humidité supérieur à 500 ppm après 15 mn d'exposition à une atmosphère ayant une teneur en eau relative de 20%.

### Exemple 1c

### Synthèse de C-LiFe_{0,98}Mg_{0,02}PO₄

On a préparé un composé LiFe_{0,98}Mg_{0,02}PO₄ par un procédé par voie fondue. On a mélangé les composés Fe₂O₃, Li₂CO₃, (NH₄)₂HPO₄ et MgHPO₄ dans un rapport molaire de 0,49 / 0,5 / 0,98 / 0,02, puis on a porté ce mélange sous argon à 980°C dans un creuset en graphite, on l'a maintenu à cette température durant 1 heure pour le faire fondre, puis on l'a fait refroidir à environ 50°C en 3 heures.

Le composé LiFe_{0,98}Mg_{0,02}PO₄ ainsi obtenu a ensuite été broyé dans 90 cm³ d'isopropanol pendant 10 min avec 12 g de billes de zircone ayant un diamètre de 20 mm, puis pendant 90 min avec 440 g de billes de zircone ayant un diamètre de 3 mm, pour obtenir une poudre de taille moyenne de 1,12 µm.

La poudre de LiFe_{0,98}Mg_{0,02}PO₄ obtenue après broyage a été mélangée avec 7% en poids d'acétate de cellulose, puis séchée et traitée à 700°C pendant 1 heure sous argon pour donner un matériau C-LiFe_{0,98}Mg_{0,02}PO₄ contenant un dépôt de 1,32% en poids de carbone et présentant une surface spécifique de 19,2 m²/g.

Dans les mêmes conditions que dans l'exemple la, le matériau broyé présente un taux d'humidité supérieur à 500 ppm après 15 mn d'exposition à une atmosphère ayant une teneur en eau relative de 20%.

### Exemple 1d

### Synthèse de C-LiFePO₄ par un procédé hydrothermal.

On a préparé un composé LiFePO₄ par un procédé hydrothermal tel que décrit dans l'exemple 4 de US 2007/054187 à partir de FeSO₄, H₃PO₄ et LiOH comme précurseurs. La poudre de LiFePO₄ ainsi obtenue a été mélangée avec du monohydrate de lactose tel que décrit dans l'exemple 5 de US 2007/054187, puis soumis à un traitement thermique pour pyrolyser le monohydrate de lactose selon le mode opératoire décrit dans l'exemple 5 de US 2007/054187. On a ainsi obtenu après désagglomération, un matériau C-LiFePO₄ sous forme de particules ayant une dimension moyenne inférieure à 0,6 µm, ayant une surface spécifique de 17,4 m²/g.

Dans les mêmes conditions que dans l'exemple la, le matériau broyé présente un taux d'humidité supérieur à 800 ppm après 15 mn d'exposition à une atmosphère ayant une teneur en eau relative de 20%.

### Exemple 2

### Préparation de C-Li₁₋ₓFePO₄

On a préparé 4 échantillons du matériau de l'exemple 1, on les a traités pendant 3 heures avec différentes quantités de phényl iodoso diacétate dans l'acétonitrile sec. Les quantités relatives de phosphate et de diacétate on été choisies pour obtenir les matériaux C-Li₁-ₓFePO₄ dans lesquels x est respectivement environ 0,02, 0,04, 0,06, 0,08 et 0,1. Après filtration, et lavage à l'acétonitrile sec, on a séché le produit sous vide à 80°C pendant 3 heures.

### Exemple 3

### Préparation de batteries à électrolyte liquide

Des batteries à électrolyte liquide ont été préparées selon le mode opératoire suivant.

On a mélangé soigneusement pendant 1 heure, un copolymère PVdF-HFP (fourni par Atochem), une poudre de graphite EBN-1010 (fourni par Superior Graphite) dans la N-méthylpyrrolidone à l'aide de billes de zircone dans un mélangeur Turbula® pour obtenir une dispersion constituée par le mélange PVdF-HFP - graphite - NMP 80/10/10 en poids. Le mélange obtenu a ensuite été déposé sur une feuille d'aluminium portant un revêtement carboné (fournie par Intellicoat), à l'aide d'un dispositif Gardner®, le film déposé a été séché sous vide à 80°C pendant 24 heures, puis stocké en boîte à gants.

Une batterie du type "bouton" a été assemblée et scellée en boîte à gants, en utilisant la feuille d'aluminium carbonée portant le revêtement contenant le matériau C-LiFePO₄ comme cathode, un film de lithium comme anode et un séparateur ayant une épaisseur de 25 µm (fourni par Celgard) imprégné par une solution 1M de LiPF₆ dans un mélange EC/DEC 3/7.

Dans les différentes batteries assemblées selon ce mode opératoire, le matériau de cathode contient soit le matériau C-LiFePO₄ directement obtenu par le procédé de l'exemple 1 (x = 0, neuf), soit un matériau C-LiFePO₄ de l'exemple 1 après stockage, soit un matériau C-Li₁-ₓFePO₄ de l'exemple 2. Le tableau suivant résume la nature des matériaux modifiés. "neuf" signifie que le matériau est utilisé immédiatement après sa synthèse selon l'exemple 1. "neuve" signifie que la cathode est montée dans la batterie dès qu'elle est élaborée. Le tableau indique également la capacité C de la cathode de la batterie, ladite capacité étant exprimée en mg de matière électroactive C-Li₁-ₓFePO₄ par cm² de la surface de la cathode.

| Batterie | C-Li₁₋ₓFePO₄ | Cathode | C (mg/cm²) |
|---|---|---|---|
| A2 | x=0, Neuf, | Neuve | 5,51 |
| B2 | x=0, Stockage 8 jours sous air | Neuve | 4,43 |
| A3 | x=0,1 | Neuve | 4,96 |
| B3 | x=0,08 | Neuve | 3,51 |
| C3 | x=0,06 | Neuve | 5,12 |
| D3 | x=0,04 | Neuve | 4,66 |
| E3 | x=0,02 | Neuve | 5,01 |
| F3 | x=0, Neuf | Neuve | 5,12 |

### Analyse par voltampérométrie cyclique

Avant cyclage, les batteries neuves sont soumises à un balayage de potentiel en réduction (20 mV/80 s) du potentiel d'abandon jusqu'à 2 V. Cette technique permet de détecter l'activité électrochimique d'impuretés de Fe(III) présentes dans le matériau C-LiFePO₄ initial. Ce balayage en réduction est suivi d'un balayage en oxidation jusqu'à 3,2 V ce qui permet d'étudier la réversibilité du couple.

Les batteries A2 et B2 ont été soumises à une voltampérométrie cyclique à balayage à température ambiante, avec une vitesse de 20 mV/80 s, à l'aide d'un potentiostat multicanaux VMP2 (Biologic-Science Instruments) d'abord en réduction du potentiel d'abandon jusqu'à 2 V, puis en oxydation entre 2 et 3,2 V. Les voltampérogrammes correspondants sont représentés sur la figure 2. Pour la batterie B2, les pics de réduction et d'oxydation sont plus intenses, ce qui indique que le taux d'impuretés contenant du Fe(III) est plus important que dans A2. Il est important de noter que la réoxydation de cette impureté s'effectue en partie avant 3,2V. Le comportement de la batterie B2 est supposé être du à la formation d'impuretés Fe(III) durant le stockage à l'air du phosphate.

Les batteries A3 à F3 qui ont été délithiés chimiquement ont été soumises à une voltampérométrie cyclique dans les mêmes conditions que les batteries A2 et B2. Les voltampérogrammes correspondant sont représentés sur la figure 3. Les pics de réoxydation sont identiques pour toutes les batteries. Ceci met en évidence que les pics de réoxydation observés avant 3,2 V ne correspondent pas à l'activité de C-LiFePO₄. D'autre part, l'oxydation chimique partielle subie par les matériaux n'a pas conduit à une augmetation de l'activité du pic d'impuretés. Ceci indique que l'impureté n'est pas présente sous forme réduite dans le matériau initial, mais provient bien d'une dégradation de C-LiFePO₄.

### EXEMPLE 4

### Préparation de batteries à électrolyte solide

Dans les différentes batteries assemblées dans cette exemple, la cathode est élaborée avec le matériau de cathode contient C-LiFePO₄ directement obtenu par le procédé de l'exemple 1. Ensuite, la cathode est montée directement après son élaboration dans la batterie (neuve), soit elle est conservée dans certaines conditions avant montage dans la batterie. Dans le tableau qui suit, "Fe(III)" indique la teneur en Fe(III) formé par rapport à la quantité de Fe(II), ΔFe(III)" indique l'augmentation du taux de Fe(III) au cours du stockage, et C désigne la capacité de la cathode de la batterie, exprimée en mg de matière électroactive par cm² de la surface de la cathode.

| Batterie | Cathode | Fe(III) | ΔFe(III) | C (mg/cm²) |
|---|---|---|---|---|
| A4 | Neuve | 0,9 | - | 5,51 |
| B4 | Stockage de 8 jours à l'air ambiant | 2,4 | 166% | 4,76 |
| C4 | Stockage de 31 jours à l'air ambiant | 4,6 | 411% | 4,49 |
| A5 | Neuve | | | 5,51 |
| B5 | Stockage de 31 jours sous argon sec | | | 4,80 |
| C5 | Stockage de 31 jours sous air sec | | | 3,81 |
| A6 | Stockage de 31 jours à l'air ambiant | | | 5,11 |
| B6 | Stockage de 31 jours sous argon sec | | | 5,8 |
| C6 | Stockage de 31 jours sous air sec | | | 3,81 |
| A7 | C-LiFePO₄ utilisé dès son élaboration | | | 3,01 |
| B7 | C-LiFePO₄ après broyage | | | 4,73 |

Les batteries à électrolyte solide ont été préparées selon le mode opératoire suivant.

On a mélangé soigneusement pendant 1 heure, 2,06 g de C-LiFePO₄, 1,654 g, du poly (oxyde d'éthylène) ayant une masse moléculaire de 400 000 (fourni par Aldrich), et 334 mg de poudre de carbone Ketjenblack (fourni par Akzo-Nobel) dans l'acétonitrile, à l'aide de billes de zircone dans un mélangeur Turbula®. Le mélange obtenu a ensuite été déposé sur une feuille d'aluminium portant un revêtement carboné (fournie par Intellicoat), à l'aide d'un dispositif Gardner ®, le film déposé a été séché sous vide à 80°C pendant 12 heures, puis stocké en boîte à gants.

Une batterie du type "bouton" a été assemblée et scellée en boîte à gants, en utilisant la feuille d'aluminium carbonée portant le revêtement contenant le phosphate comme cathode, un film de lithium comme anode et un film de poly (oxyde d'éthylène) contenant 30% en poids de LiTFSI (fourni par la société 3M).

### Analyse par voltampérométrie cyclique

Les batteries A4 à C4 et A5 à C5, assemblées selon ce mode opératoire, ont été soumises à une voltampérométrie tel que décrite dans l'exemple 3. Les voltampérogrammes correspondants sont représentés sur la figure 4 pour les batteries A4 à C4 et sur la figure 5 pour les batteries A5 à C5.

Comme précédemment, le comportement des batterie B4 et C4 peut être imputé à la production d'impuretés Fe(III) durant le stockage à l'air des cathodes préparées à partir de LiFePO₄ "neuf", lesdites impuretés étant FePO₄ pour la batterie C4.

En ce qui concerne les batteries B5 et C5, il apparaît qu'il ne se forme pas d'impuretés lors du stockage sous argon sec ou sous air sec, l'allure des courbes en oxydation n'étant pas modifiée.

### Cyclage intentiostatique

Les batteries A6, B6 et C6, assemblées comme les batteries A4 à C4 et A5 à C5, ont été soumises à un cyclage intentiostatique C/4 à 60°C. Les courbes sont représentées sur la figure 6. Les résultats confirment que, en plus de la production d'impuretés Fe(III), l'exposition de la cathode à une atmosphère humide induit une détérioration de la capacité de cyclage. Exprimée en % de perte de capacité pour 100 cycles, la perte de capacité après 100 cycles d'environ 4,1% par A6, 1,5% pour B6 et 1,6% pour C6.

Selon le procédé utilisé pour la préparation des batteries A6, B6 et C6 respectivement, on a préparé :
- des batteries A6.1, B6.1 et C6.1 en remplaçant le matériau C-LiFePO₄ de l'exemple la par le matériau C-LiFe_{0,5}Mn_{0,5}PO₄ de l'exemple 1b,
- des batteries A6.2, B6.2 et C6.2 remplaçant le matériau C-LiFePO₄ de l'exemple la par le C-LiFe_{0.98}Mg_{0.02}PO₄ de l'exemple 1c,
- des batteries A6.3, B6.3 et C6.3 remplaçant le matériau C-LiFePO₄ de l'exemple la par le matériau C-LiFePO₄ de l'exemple 1d.

La perte de capacité après 100 cycles pour chaque batterie est indiqué dans le tableau suivant :

| | | | | | |
|---|---|---|---|---|---|
| A6.1 | 4,0% | B6.1 | 1,4% | C6.1 | 1,5% |
| A6.2 | 3,9% | B6.2 | 1,6% | C6.2 | 1,5% |
| A6.3 | 5,2% | B6.3 | 1,3% | C6.3 | 1,4% |

### Jet milling

Les batteries A7 et B7 diffèrent par le fait que le matériau C-LiFePO₄ est utilisé dès son élaboration dans A7 et après un broyage de 3 min sous air comprimé avec un point de rosée de -6°C.

La figure 7 représente les courbes de voltampérométrie cyclique réalisées comme précédemment, et la figure 8 représente les courbes intentiostatiques, également réalisées comme précédemment.

Les courbes de voltampérométrie montrent la formation de 1,3 à 2% de phase Fe(III), et le cyclage intentiostatique montre une augmentation importante de la perte de capacité à 60°C après 100 cycles pour le matériau broyé à un point de rosée de -6°C (6% au lieu de 2% pour le matériau non broyé). En revanche, un broyage effectué à un point de rosée de -70°C n'augmente pas de façon significative la perte de capacité.

Des batteries A7.1 et B7.1 ont été préparés comme A7 et B7 mais en remplaçant le matériau C-LiFePO₄ de l'exemple la par le matériau C-LiFePO₄ de l'exemple 1d. Le cyclage intentiostatique montre une augmentation importante de la perte de capacité à 60°C après 100 cycles pour le matériau broyé à un point de rosée de -6°C (7,8% au lieu de 1,8% pour le matériau non broyé).

### Exemple 5

Des batteries ont été montées selon le mode opératoire de l'exemple 3, en utilisant des composés C-LiFePO₄ ayant subi divers traitements avant l'élaboration de la cathode. Chaque traitement a été appliqué à deux batteries. Le tableau suivant donne l'influence du traitement, d'une durée de 10 heures, sur la capacité spécifique finale des batteries correspondantes.

| Traitement | Capacité spécifique | |
|---|---|---|
| LiFePO₄ directement issu de l'exemple 1 | 91,7 | 92,2 |
| Stockage dans l'air humide en autoclave à 100°C | 85,8 | 85,6 |
| Lavage à l'eau sous argon à 1 00°C | 94,4 | 94,8 |
| Lavage à l'eau sous air à 60°C | 92,1 | 92,1 |
| Stockage sous air sec à 100°C | 92,3 | 91,9 |
| Stockage sous argon humide en autoclave à 100°C | 90,8 | 90,5 |

Les résultats ci-dessus montrent clairement que l'eau (apportée par une atmosphère gazeuse oxydante) dégrade le matériau C-AMXO₄, ce qui se traduit en général par la formation de Fe⁺³ sous une forme mal définie mais qui est électrochimiquement active, et par la présence de produits connexes tels que par exemple l'hydroxyde de lithium et des composés phosphorés de lithium qui sont éventuellement solubles. Les composés de Fe⁺³ et lesdits composés de lithium sont susceptibles de réagir avec les composantes d'une cellule électrochimique dans laquelle le matériau C-AMXO₄ est utilisé comme matériau d'électrode et d'affecter le fonctionnement de ladite cellule.

## Revendications

1. Procédé d'obtention d'un matériau C-AMXO₄ ayant une teneur en eau inférieure à 1000 ppm, le matériau étant constitué par des particules d'un composé répondant à la formule AMXO₄ qui ont une structure olivine et qui portent sur au moins une partie de leur surface un film de carbone déposé par pyrolyse, la formule AMXO₄ étant telle que :
- A représente Li, seul ou partiellement remplacé par au plus 10% atomique de Na ou K ;
- M représente Fe", seul ou partiellement remplacé par au plus 50% atomique d'un ou plusieurs autres métaux choisis parmi Mn, Ni et Co, et/ou par au plus 10% atomique d'un ou plusieurs métaux aliovalents ou isovalents autres que Mn, Ni ou Co, et/ou par au plus 5% atomique de Fe^{III} ;
- XO₄ représente PO₄ seul ou partiellement remplacé par au plus 10% molaire d'au moins un groupe choisi parmi SO₄ et SiO₄ ;
ledit procédé étant **caractérisé en ce qu'**il comprend :
- la préparation dudit matériau C-AMXO₄, ladite préparation comprenant la pyrolyse d'un composé source de carbone conducteur, dans une atmosphère oxydante avec un point de rosée inférieur à -30°C, de préférence inférieur à -50°C, et plus particulièrement inférieur à-70°C, ou dans une atmosphère non oxydante, pour obtenir le matériau C-AMXO₄ ayant une teneur en eau inférieure à 1000 ppm,
- le placement immédiatement après sa préparation, puis le maintien du matériau C-AMXO₄ dans une atmosphère oxydante avec un point de rosée inférieur à -30°C, de préférence inférieur à -50°C, et plus particulièrement inférieur à -70°C, ou dans une atmosphère non oxydante, pendant son stockage et son utilisation.

2. Procédé selon la revendication 1, **caractérisé en ce que** la teneur en eau du matériau C-AMXO₄ est inférieure à 500 ppm.

3. Procédé selon la revendication 1, **caractérisé en ce que** la préparation du matériau C-AMXO₄ comprend une étape de broyage effectuée sur le matériau C-AMXO₄, soit sous une atmosphère oxydante avec un point de rosée inférieur à -30°C, de préférence inférieur à -50°C et plus particulièrement inférieur à -70°C, soit sous une atmosphère non oxydante.

4. Procédé selon la revendication 3, **caractérisé en ce que** le broyage est un broyage à jet.

5. Procédé selon la revendication 1, **caractérisé en ce que** la préparation du matériau C-AMXO₄ comprend une étape consistant à laver le matériau C-AMXO₄ dans de l'eau à une température supérieure à 60°C, à récupérer le produit par filtration et à le sécher jusqu'à une teneur en eau maximale de 1000 ppm.

6. Procédé selon la revendication 1, **caractérisé en ce que** M représente Fe^{II}, seul ou partiellement remplacé par au plus 50% atomique d'un ou plusieurs autres métaux choisis parmi Mn, Ni et Co, et/ou par au plus 10% atomique d'un ou plusieurs métaux aliovalents ou isovalents choisis parmi Mg, Mo, Nb, Ti, Al, Ta, Ge, La, Y, Yb, Sm, Ce, Hf, Cr, Zr, Bi, Zn, Ca et W, et/ou par au plus 5% atomique de Fe^{III}.

7. Procédé selon la revendication 6, **caractérisé en ce que** la teneur en eau du matériau C-AMXO₄ est inférieure à 200 ppm.

8. Procédé selon la revendication 1, **caractérisé en ce que** le film de carbone est uniforme, adhérent et non poudreux.

9. Procédé selon la revendication 1, **caractérisé en ce que** le film de carbone représente de 0,03 à 15% en poids par rapport au poids total.

10. Procédé selon la revendication 1, **caractérisé en ce que** le matériau AMXO₄ contient moins de 1 000 ppm d'eau, et moins de 1 000 ppm de LiOH, de Li₃PO₄, de Li₄P₂O₇, de polyphosphates de lithium éventuellement hydratés ou de Li₂CO₃, de préférence moins de 500 ppm.

11. Procédé selon la revendication 1, **caractérisé en ce que** le matériau AMXO₄ contient moins de 1 000 ppm d'eau, et moins de 10 000 ppm de Fe₂O₃, de Li₃Fe₂(PO₄)₃, de LiFeP₂O₇ ou d'un composé de Fe⁺³ détectable par voie électrochimique, de préférence moins de 5 000 ppm.

12. Procédé selon la revendication 1, **caractérisé en ce que** le matériau C-AMXO₄ est C-LiFePO₄.

13. Procédé selon la revendication 12, **caractérisé en ce que** le matériau C-LiFePO₄ contient :
- moins de 1 000 ppm d'eau,
- moins de 1 000 ppm de LiOH, de Li₃PO₄, de Li₄P₂O₇, de polyphosphates de lithium éventuellement hydratés, ou de Li₂CO₃, de préférence moins de 500 ppm,
- moins de 10 000 ppm de Fe₂O₃, de Li₃Fe₂(PO₄)₃, de LiFeP₂O₇, ou d'un composé du Fe⁺³ détectable par voie électrochimique, de préférence moins de 5 000 ppm.

14. Procédé de préparation d'une cathode d'une batterie lithium ion, ledit procédé comprenant la mise en oeuvre d'un procédé de préparation d'un matériau C-AMXO₄ ayant une teneur en eau inférieure à 1000 ppm selon l'une quelconque des revendications 1 à 13, et l'utilisation du matériau C-AMXO₄ pour préparer ladite cathode.

## Patentansprüche

1. Verfahren zur Herstellung eines C-AMXO₄-Werkstoffs mit einem Wassergehalt von weniger als 1.000 ppm, wobei der Werkstoff aus Partikeln einer Verbindung steht, die der Formel AMXO₄ entspricht, und eine Olivin-Struktur haben, wobei sie auf mindestens einem Teil ihrer Oberfläche mit einer Kohlenstoffdünnschicht versehen sind, welche mittels Pyrolyse abgeschieden wurde, wobei die Formel AMXO₄ derart beschaffen ist, dass:
- A für Li steht, welches allein vorliegt oder teilweise, zu höchstens 10 Atom-%, durch Na oder K ersetzt ist;
- M für Fe^{II} steht, welches allein vorliegt oder teilweise ersetzt ist, nämlich zu höchstens 50 Atom-%, durch ein oder mehrere weitere Metalle, die aus Mn, Ni und Co ausgewählt sind, und/oder zu höchstens 10-Atom-% durch ein oder mehrere anderswertige oder gleichwertige Metalle, die sich von Mn, Ni oder Co unterscheiden, und/oder zu höchstens 5 Atom-%, durch Fe^{III};
- XO₄ für PO₄ steht, welches allein vorliegt oder teilweise, zu höchstens 10 mol-%, durch mindestens eine Gruppe ersetzt ist, die aus SO₄ und SiO₄ ausgewählt ist;
wobei das Verfahren **dadurch gekennzeichnet ist, dass** es Folgendes umfasst:
- Herstellen des C-AMXO₄-Werkstoffs, wobei das Herstellen die Pyrolyse einer leitfähigen Verbindung, welche eine Kohlenstoffquelle darstellt, in einer oxidierenden Atmosphäre mit einem Taupunkt von weniger als -30 °C, vorzugsweise von weniger als -50 °C, und insbesondere von weniger als -70 °C, oder in einer nicht-oxidierenden Atmosphäre umfasst, um den C-AMXO₄-Werkstoff zu erhalten, welcher einen Wassergehalt von weniger als 1.000 ppm hat,
- Überführen des C-AMXO₄-Werkstoffs, unmittelbar nach seiner Herstellung, in eine oxidierende Atmosphäre mit einem Taupunkt von weniger als -30 °C, vorzugsweise von weniger als -50 °C, und insbesondere von weniger als -70 °C, oder in eine nicht-oxidierende Atmosphäre, worauhin dieser für die Dauer seiner Lagerung und seiner Verwendung darin belassen wird.

2. Verfahren nach Anspruch 1, **dadurch gekennzeichnet, dass** der Wassergehalt des C-AMXO₄-Werkstoffs weniger als 500 ppm beträgt.

3. Verfahren nach Anspruch 1, **dadurch gekennzeichnet, dass** das Herstellen des C-AMXO₄-Werkstoffs einen Zerkleinerungsschritt umfasst, welchem der C-AMXO₄-Werkstoff unterzogen wird, und zwar entweder unter einer oxidierenden Atmosphäre mit einem Taupunkt von weniger als -30 °C, vorzugsweise von weniger als -50 °C, und insbesondere von weniger als -70 °C, oder unter einer nicht-oxidierenden Atmosphäre.

4. Verfahren nach Anspruch 3, **dadurch gekennzeichnet, dass** es sich bei der Zerkleinerung um eine Strahlzerkleinerung handelt.

5. Verfahren nach Anspruch 1, **dadurch gekennzeichnet, dass** das Herstellen des C-AMXO4-Werkstoffs einen Schritt umfasst, der darin besteht, der C-AMXO₄-Werkstoff bei einer Temperatur von mehr als 60 °C in Wasser zu waschen, das Produkt mittels Filtration zu gewinnen und es bis zu einem Wassergehalt von maximal 1.000 ppm zu trocknen.

6. Verfahren nach Anspruch 1, **dadurch gekennzeichnet, dass** M für Fe^{II} steht, welches allein vorliegt oder teilweise ersetzt ist, nämlich zu höchstens 50 Atom-%, durch ein oder mehrere weitere Metalle, die aus Mn, Ni und Co ausgewählt sind, und/oder zu höchstens 10-Atom-% durch ein oder mehrere anderswertige oder gleichwertige Metalle, die aus Mg, Mo, Nb, Ti, Al, Ta, Ge, La, Y, Yb, Sm, Ce, Hf, Cr, Zr, Bi, Zn, Ca und W ausgewählt sind, und/oder zu höchstens 5 Atom-%, durch Fe^{III}.

7. Verfahren nach Anspruch 6, **dadurch gekennzeichnet, dass** der Wassergehalt des C-AMXO₄-Werkstoffs weniger als 200 ppm beträgt.

8. Verfahren nach Anspruch 1, **dadurch gekennzeichnet, dass** die Kohlenstoffdünnschicht gleichförmig, anhaftend und nicht pulverförmig ist.

9. Verfahren nach Anspruch 1, **dadurch gekennzeichnet, dass** die Kohlenstoffdünnschicht 0,03 bis 15 Gewichts-% ausmacht, bezogen auf das Gesamtgewicht.

10. Verfahren nach Anspruch 1, **dadurch gekennzeichnet, dass** der AMXO₄-Werkstoff weniger als 1.000 ppm an Wasser sowie weniger als 1.000 ppm an LiOH, an Li₃PO₄, an Li₄P₂O₇, an möglicherweise hydratisierten Lithiumpolyphosphaten oder an Li₂CO₃ enthält, vorzugsweise weniger als 500 ppm.

11. Verfahren nach Anspruch 1, **dadurch gekennzeichnet, dass** der AMXO₄-Werkstoff weniger als 1.000 ppm an Wasser sowie weniger als 10.000 ppm an Fe₂O₃, an Li₃Fe₂(PO₄)₃, an LiFeP₂O₇ oder an einer elektrochemisch nachweisbaren Fe⁺³-Verbindung enthält, vorzugsweise weniger als 5.000 ppm.

12. Verfahren nach Anspruch 1, **dadurch gekennzeichnet, dass** es sich bei dem C-AMXO₄-Werkstoff um C-LiFePO₄ handelt.

13. Verfahren nach Anspruch 12, **dadurch gekennzeichnet, dass** der C-LiFePO₄-Werkstoff Folgendes enthält:
- weniger als 1.000 ppm an Wasser,
- weniger als 1.000 ppm an LiOH, an Li₃PO₄, an Li₄P₂O₇, an möglicherweise hydratisierten Lithiumpolyphosphaten, oder an Li₂CO₃, vorzugsweise weniger als 500 ppm,
- weniger als 10.000 ppm an Fe₂O₃, an Li₃Fe₂(PO₄)₃, an LiFeP₂O₇ oder an einer elektrochemisch nachweisbaren Fe⁺³-Verbindung, vorzugsweise weniger als 5.000 ppm.

14. Verfahren zur Herstellung einer Kathode einer Lithium-Ionen-Batterie, wobei das Verfahren das Umsetzen eines Verfahrens zur Herstellung eines C-AMXO₄-Werkstoffs mit einem Wassergehalt von weniger als 1.000 gemäß einem beliebigen der Ansprüche 1 bis 13 sowie das Verwenden des C-AMXO₄-Werkstoffs zur Herstellung der Kathode umfasst.

## Claims

1. A method for obtaining a C-AMXO₄ material having a water content of less than 1000 ppm, the material being made up of particles of a compound of formula AMXO₄ which have an olivine structure and which bear on at least one part of the surface thereof a carbon film deposited by pyrolysis, the formula AMXO₄ being such that:
- A represents Li, alone or partially replaced by at most 10 atom% of Na or K;
- M represents Fe^{II}, alone or partially replaced by at most 50 atom% of one or more other metals selected from Mn, Ni and Co, and/or by at most 10 atom% of one or more aliovalent or isovalent metals other than Mn, Ni or Co, and/or by at most 5 atom% of Fe^{III};
- XO₄ represents PO₄ alone or partially replaced by at most 10 mol% of at least one group selected from SO₄ and SiO₄;
said method being **characterised in that** it comprises:
- preparing said C-AMXO₄ material, said preparation comprising pyrolysis of a compound which is a source of conductive carbon in an oxidising atmosphere with a dew point of less than -30°C, preferably less than -50°C, and more particularly less than -70°C, or in a non-oxidising atmosphere in order to obtain the C-AMXO₄ material having a water content of less than 1000 ppm, and,
- immediately after the preparation thereof, placing and then maintaining the C-AMXO₄ material during the storage and use thereof in an oxidising atmosphere with a dew point of less than -30°C, preferably less than -50°C, and more particularly less than -70°C, or in a non-oxidising atmosphere.

2. A method according to claim 1, **characterised in that** the water content of the C-AMXO₄ material is less than 500 ppm.

3. A method according to claim 1, **characterised in that** preparation of the C-AMXO₄ material comprises a grinding stage carried out on the C-AMXO₄ material, either in an oxidising atmosphere with a dew point of less than -30°C, preferably less than -50°C and more particularly less than -70°C, or in a non-oxidising atmosphere.

4. A method according to claim 3, **characterised in that** grinding is jet grinding.

5. A method according to claim 1, **characterised in that** preparation of the C-AMXO₄ material comprises a stage consisting of washing the C-AMXO₄ material in water at a temperature of greater than 60°C, recovering the product by filtration and drying it down to a maximum water content of 1000 ppm.

6. A method according to claim 1, **characterised in that** M represents Fe^{II}, alone or partially replaced by at most 50 atom% of one or more other metals selected from Mn, Ni and Co, and/or by at most 10 atom% of one or more aliovalent or isovalent metals selected from Mg, Mo, Nb, Ti, Al, Ta, Ge, La, Y, Yb, Sm, Ce, Hf, Cr, Zr, Bi, Zn, Ca and W, and/or by at most 5 atom% of Fe^{III}.

7. A method according to claim 6, **characterised in that** the water content of the C-AMXO₄ material is less than 200 ppm.

8. A method according to claim 1, **characterised in that** the carbon film is uniform, adherent and non-powdery.

9. A method according to claim 1, **characterised in that** the carbon film represents from 0.03 to 15% by weight relative to the total weight.

10. A method according to claim 1, **characterised in that** the AMXO₄ material contains less than 1000 ppm of water, and less than 1000 ppm, preferably less than 500 ppm, of LiOH, Li₃PO₄, Li₄P₂O₇, optionally hydrated lithium polyphosphates or Li₂CO₃.

11. A method according to claim 1, **characterised in that** the AMXO₄ material contains less than 1000 ppm of water, and less than 10,000 ppm, preferably less than 5000 ppm, of Fe₂O₃, Li₃Fe₂(PO₄)₃, LiFeP₂O₇ or an electrochemically detectable Fe⁺³ compound.

12. A method according to claim 1, **characterised in that** the C-AMXO₄ material is C-LiFePO₄.

13. A method according to claim 12, **characterised in that** C-LiFePO₄ material contains:
- less than 1000 ppm of water,
- less than 1000 ppm, preferably less than 500 ppm, of LiOH, Li₃PO₄, Li₄P₂O₇, optionally hydrated lithium polyphosphates or Li₂CO₃,
- less than 10,000 ppm, preferably less than 5000 ppm, of Fe₂O₃, Li₃Fe₂(PO₄)₃, LiFeP₂O₇ or an electrochemically detectable Fe⁺³ compound.

14. A method for preparing a cathode of a lithium ion battery, said method comprising the performance of a method for preparing a C-AMXO₄ material having a water content of less than 1000 ppm according to any one of claims 1 to 13, and use of the C-AMXO₄ material for preparing said cathode.
